# EUROPÄISCHE PATENTSCHRIFT

(11) **EP 3 545 347 B1**
(45) Veröffentlichungstag und Bekanntmachung des Hinweises auf die Patenterteilung: **27.03.2024**
(21) Anmeldenummer: 17818433.9
(22) Anmeldetag: 24.11.2017
(51) Int. Cl.: G02B 6/30, G02F 1/01, G02B 6/12, G02B 6/122, G02B 6/14, G02F 1/015

(54) **OPTOELEKTRONISCHE BAUELEMENTE UND VERFAHREN ZUM HERSTELLEN EINES OPTOELEKTRONISCHEN BAUELEMENTES**
OPTOELECTRONIC COMPONENTS AND METHOD FOR PRODUCING AN OPTOELECTRONIC COMPONENT
COMPOSANT OPTOÉLECTRONIQUE ET PROCÉDÉ DE FABRICATION D'UN COMPOSANT OPTOÉLECTRONIQUE

(30) Priorität: 25.11.2016 DE 102016223455
(43) Veröffentlichungstag der Anmeldung: 02.10.2019
(73) Patentinhaber: Fraunhofer-Gesellschaft zur Förderung der angewandten Forschung e.V., 80686 München (DE)
(72) Erfinder: KLEINERT, Moritz, 13187 Berlin (DE)
(74) Vertreter: Maikowski & Ninnemann Patentanwälte Partnerschaft mbB
(86) Internationale Anmeldenummer: PCT/EP2017/080344
(87) Internationale Veröffentlichungsnummer: WO 2018/096099

(56) Entgegenhaltungen:
- EP-A1- 2 584 397
- EP-A1- 2 696 227
- US-A1- 2003 053 729
- US-A1- 2003 152 329
- US-A1- 2014 105 553
- US-A1- 2014 341 496
- MORITZ KLEINERT ET AL: "Graphene-based electro-absorption modulator integrated in a passive polymer waveguide platform", OPTICAL MATERIALS EXPRESS, Bd. 6, Nr. 6, 10. Mai 2016 (2016-05-10), Seiten 1800-1807, XP055403208, DOI: 10.1364/OME.6.001800

## Beschreibung

Die Erfindung betrifft ein optoelektronisches Bauelement gemäß dem Oberbegriff des Anspruchs 1 sowie ein Verfahren zum Herstellen eines optoelektronischen Bauelementes gemäß dem Oberbegriff des Anspruchs 15.

Zweidimensionale Materialien derartiger optoelektronischer Bauelemente bestehen aus einer nahezu mono-atomaren oder mono-molekularen Schicht in einer charakteristischen Anordnung. Derartige Materialien haben grundsätzlich andere Eigenschaften als konventionelle dreidimensionale Kristalle aus denselben Atomen oder Molekülen in anderer Struktur. Besonders interessante Eigenschaften der zweidimensionalen Materialien sind ihre hohe mechanische Festigkeit und in elektrooptischer Hinsicht eine Bandlücke, die sich durch Anlegen einer Spannung z.B. von 0 eV auf mehrere eV einstellen lässt. Somit lassen sich mit den zweidimensionalen Materialien z.B. Fotodetektoren und Lichtmodulatoren für sehr weite Wellenlängenbereiche realisieren. Ein bekanntes zweidimensionales Material ist das auf Kohlenstoffatomen basierende Graphen, das z.B. auf Kupferträgern hergestellt und nach Herstellung von diesen abgelöst wird.

Zur Ausbildung von optoelektronischen Bauelementen werden Lagen aus einem zweidimensionalen Material insbesondere in optische Wellenleiter integriert. So offenbart zum Beispiel die EP 2 584 397 A1 einen optischen Wellenleiter mit einem eine Rippenstruktur ausbildenden Siliziumkern, wobei eine Lage aus Graphen über die Rippenstruktur gelegt ist. Mit dieser Anordnung befindet sich das Intensitätsmaximum der im Wellenleiter geführten Wellen jedoch beabstandet zu der Graphenlage. Zudem besitzen die sich in dem Wellenleiter ausbreitenden Lichtmoden einen deutlich anderen Durchmesser als Moden in Glasfasern, mit denen Licht aus dem Bauelement ein- und ausgekoppelt wird. Hierdurch können hohe Kopplungsverluste auftreten. Ein auf Graphen basierender Modulator ist in dem Artikel Kleinert et al.: "Graphenebased electro-absorption modulator integrated in a passive polymer waveguide platform", Optical Materials Express, Bd. 6, Nr. 6, 10. Mai 2016 (2016-05-10), Seiten 1800-1807 beschrieben.

Der Erfindung liegt das Problem zugrunde, einerseits eine möglichst gute Führung einer Lichtwelle und andererseits eine möglichst verlustarme Ankopplung des Bauelementes zu einer Glasfaser zu realisieren.

Dieses Problem wird durch die Bereitstellung des optoelektronischen Bauelements mit den Merkmalen des Anspruchs 1 sowie durch das Verfahren zum Herstellen eines optoelektronischen Bauelementes gemäß Anspruch 15 gelöst. Weiterbildungen der Erfindung sind in den abhängigen Ansprüchen angegeben.

Danach wird ein optoelektronisches Bauelement bereitgestellt, mit
- einem optischen Wellenleiter, der mindestens eine passive und mindestens eine aktive Sektion umfasst, wobei
- die aktive Sektion mindestens eine aus einem zweidimensionalen Material gebildete (und insbesondere mit einem Kontakt versehene) Lage aufweist, wobei die Lage aus dem zweidimensionalen Material zumindest teilweise in einem Wellenleiterkern der aktiven Sektion oder zumindest teilweise angrenzend an den Wellenleiterkern der aktiven Sektion angeordnet ist, und wobei
- der Brechungsindexunterschied bezogen auf dieselbe Wellenlänge zwischen einem den Wellenleiterkern der aktiven Sektion ausbildenden Kernmaterial und einem einen Wellenleitermantel der aktiven Sektion ausbildenden Mantelmaterial größer ist als der Brechungsindexunterschied zwischen einem einen Wellenleiterkern der passiven Sektion ausbildenden Kernmaterial und einem einen Wellenleitermantel der passiven Sektion ausbildenden Mantelmaterial.

Durch den größeren Brechungsindexunterschied in der aktiven Sektion des Wellenleiters erfährt eine Lichtwelle dort eine stärkere Führung als in der passiven Wellenleitersektion. Dies hat zur Folge, dass die Lichtwelle in der aktiven Sektion eine geringere Ausdehnung und somit eine höhere Intensität im Wellenleiterzentrum, d.h. im Bereich der Lage aus dem zweidimensionalen Material, besitzt. Infolgedessen erhöht sich die Effizienz der Interaktion der Lichtwelle mit dem zweidimensionalen Material und damit die Effizienz des gesamten Bauelementes. Gleichzeitig erfährt die Lichtwelle in der passiven Sektion eine schwächere Führung, was zu einer größeren Ausdehnung der Lichtwelle in diesem Bereich führt. Dies wiederum reduziert Kopplungsverluste zwischen dem optoelektronischen Bauelement und einer Glasfaser, über die die Lichtwelle in das Bauelement ein- und/oder aus dem Bauelement ausgekoppelt wird. Der Wellenleiterkern der aktiven Sektion ist insbesondere so in dem Wellenleitermantel angeordnet, dass er beidseitig (d.h. mit seiner Ober- und Unterseite) in das Mantelmaterial eingebettet ist.

Darüber hinaus ist die Lage aus dem zweidimensionalen Material insbesondere so in dem Wellenleiterkern der aktiven Sektion platziert, dass das Kernmaterial zwei einander gegenüberliegende Seiten der Lage jeweils zumindest teilweise bedeckt, d.h. das Kernmaterial grenzt an eine Ober- und eine Unterseite der Lage aus dem zweidimensionalen Material an. Denkbar ist jedoch auch, dass die Lage aus dem zweidimensionalen Material nur einseitig an das Kernmaterial angrenzt, d.h. das Kernmaterial befindet sich nur auf einer Seite der Lage. Beispielsweise ist hier die Lage aus dem zweidimensionalen Material zwischen dem Kern- und dem Mantelmaterial positioniert. Insbesondere grenzt die Lage aus dem zweidimensionalen Material zumindest teilweise (insbesondere unmittelbar) an eine Ober- oder Unterseite des Wellenleiterkerns der aktiven Sektion an. So kann die Lage beispielsweise unmittelbar von oben oder unten an das Kernmaterial angrenzen. Die Ober- bzw. Unterseite des Wellenleiterkerns wird insbesondere durch eine einem Substrat ab- bzw. zugewandte Seite des Wellenleiterkerns ausgebildet.

Des Weiteren unterscheidet sich das Kernmaterial der aktiven Sektion insbesondere von dem Kernmaterial der passiven Sektion und/oder das Mantelmaterial der aktiven Sektion unterscheidet sich von dem Mantelmaterial der passiven Sektion. Mögliche Materialien zur Ausbildung des Kernmaterials der aktiven bzw. der passiven Sektion und des Mantelmaterials der aktiven bzw. der passiven Sektion werden weiter unten erläutert.

Gemäß einer anderen Ausgestaltung der Erfindung ist die aktive Sektion des optischen Wellenleiters stark führend und die passive Sektion des optischen Wellenleiters schwach führend ausgebildet. Beispielsweise beträgt der Brechungsindexunterschied zwischen dem Kern- und dem Mantelmaterial der aktiven Sektion mindestens 0,2, mindestens 0,3 oder mindestens 0,4. Der Brechungsindexunterschied zwischen dem Kern- und dem Mantelmaterial der passiven Sektion beträgt zum Beispiel höchstens 0,1 oder höchstens 0,05. Beispielsweise weisen das Kern- und das Mantelmaterial (z.B. ein Polymer oder dotiertes oder undotiertes Siliziumdioxid) des passiven Bereichs jeweils einen Brechungsindex zwischen 1,40 bis 1,55 auf, wobei der Brechungsindex des Kernmaterials größer als der Brechungsindex des Mantelmaterials ist.

Möglich ist darüber hinaus, dass das Kernmaterial der aktiven Sektion zur lateralen Führung einer Lichtwelle strukturiert ist. Beispielsweise weist das Kernmaterial der aktiven Sektion eine Rippen- oder Streifenstruktur auf. Insbesondere kann dadurch ein sog. "single mode" (einmodiger) Wellenleiter ausgebildet werden.

Denkbar ist zudem, dass die aktive Sektion des Wellenleiters so ausgebildet ist (insbesondere der dortige Brechungsindexunterschied zwischen dem Kern- und dem Mantelmaterial), dass die in diesem Bereich geführte Lichtwelle einen Durchmesser von weniger als 3 µm oder weniger als 2 µm (z.B. zwischen 2 und 3 µm) besitzt. Die passive Sektion des Wellenleiters (insbesondere im Bereich einer Facette des Wellenleiters) kann hingegen so ausgebildet sein, dass die dort geführte Lichtwelle einen Durchmesser von mindestens 3 µm oder mindestens 5 µm (z.B. zwischen 5 und 10 µm) aufweist.

Möglich ist dann auch, dass die Lage aus zweidimensionalem Material zumindest in einer Richtung der lateralen Ebene aus dem Wellenleiterkern seitlich heraus ragt und der herausragende Teil der Lage mit Abstand zur geführten optischen Welle elektrisch über einen Metallkontakt kontaktiert ist. Damit können Verluste der geführten optischen Welle durch den Metallkontakt vermieden werden.

Gemäß einer anderen Weiterbildung der Erfindung erstreckt sich das Kernmaterial der aktiven Sektion in die passive Sektion des Wellenleiters hinein, wobei die Ausdehnung des Kernmaterials senkrecht zur Längsrichtung, d.h. die Breite und/oder die Höhe, des optischen Wellenleiters mit der Entfernung von der aktiven Sektion abnimmt. Beispielsweise nimmt die Ausdehnung des Kernmaterials kontinuierlich mit der Entfernung von der aktiven Sektion (von der Lage aus dem zweidimensionalen Material) über eine Strecke von mindestens 30 µm oder mindestens 50 µm ab. Diese Ausführung dient der verlustfreien Transformation von optischen Moden der passiven und aktiven Sektion des Wellenleiters.

Die Führung der Lichtwellen durch das Kernmaterial der aktiven Sektion wird durch die Verjüngung des Kerns auf die passive Sektion zu immer schwächer, wobei der Durchmesser der Lichtwellen immer mehr zunimmt, bis schließlich die passive Sektion die Führung voll übernimmt. Denkbar ist, dass die kontinuierliche Verjüngung des Kernmaterials zur technologischen Vereinfachung zumindest vorwiegend auf den sich unter- oder oberhalb der Lage aus dem zweidimensionalen Material erstreckenden Bereich des Kernmaterials beschränkt ist. Möglich ist auch, dass die Breite und/oder Dicke des Kernmaterials nicht kontinuierlich bis auf null geht, sondern es kann jeweils an den Enden des Kernmaterials eine Restbreite und/oder -dicke, d.h. eine Stufe, vorhanden sein.

Denkbar ist auch, dass das Mantelmaterial der aktiven Sektion zumindest einen Teil des Kernmaterials der passiven Sektion ausformt, d.h. dass das Mantelmaterial der aktiven Sektion zumindest teilweise identisch mit dem Kernmaterial der passiven Sektion ist. Insbesondere verläuft das Kernmaterial der passiven Sektion durchgehend (einstückig) sowohl in der passiven, als auch in der aktiven Sektion, wobei es wie erwähnt in der aktiven Sektion den Wellenleitermantel der aktiven Sektion bildet. Die Kern- und Mantelschichten der aktiven und der passiven Sektion des Wellenleiters sind insbesondere auf einem gemeinsamen Träger angeordnet. Insbesondere ist das erfindungsgemäße Bauelement Teil einer Wellenleiterplattform, die z.B. Bestandteil einer größeren Anordnung ist. Beispielsweise ist die Wellenleiterplattform in ein Wellenleiternetzwerk oder ein Sensorsystem integriert.

Das zweidimensionale Material besteht beispielsweise aus einer Atomlage oder aus maximal zehn Atomlagen. Beispielsweise ist das zweidimensionale Material aus Graphen, triazinbasierten graphitischen Kohlenstoffnitrid, Germanen, Molybdändisulfid, Molybdändiselenid, Silicen und/oder schwarzer Phosphor gebildet oder weist zumindest eines dieser Materialien auf, und zwar jeweils ein- und mehratomlagig.

Die aktive Sektion des Wellenleiters (d.h. die aktive Sektion des Bauelementes) ist z.B. als Fotodetektor ausgebildet. Beispielsweise ist hierfür eine Lage (z.B. aus Graphen) aus dem zweidimensionalen Material vorhanden und entsprechend beschaltet. Insbesondere wird die Lage aus dem zweidimensionalen Material mit zwei elektrischen Kontakten versehen. In dem optischen Wellenleiter geführtes Licht wird zumindest teilweise von dem zweidimensionalen Material absorbiert, wobei über die Kontakte ein resultierender Fotostrom gemessen werden kann.

Möglich ist auch, dass die aktive Sektion als Lichtmodulator ausgebildet ist, wobei insbesondere mindestens zwei Lagen aus jeweils einem zweidimensionalen Material vorhanden sind, die elektrisch durch ein Dielektrikum voneinander isoliert sind. Denkbar ist, dass das Kernmaterial der aktiven Sektion des Wellenleiters gleichzeitig auch das Dielektrikum ausbildet. Insbesondere sind die beiden Lagen aus dem zweidimensionalen Material mit elektrisch voneinander isolierten Kontakten (insbesondere aus einem Metall) verbunden, über die eine Spannung an die Lagen angelegt werden kann. Die Kontakte befinden sich insbesondere au ßerhalb der Ausdehnung einer in der aktiven Sektion des Wellenleiters geführten Lichtwelle. Es wird insbesondere eine longitudinale Durchstrahlung der Lagen aus dem zweidimensionalen Material realisiert, in dem die Lagen parallel zur Längsrichtung des optischen Wellenleiters angeordnet werden.

Das erfindungsgemäße optoelektronische Bauelement kann auch mit einer Glasfaser gekoppelt sein, wobei eine Stirnseite der Glasfaser mit einer Facette des Bauelementes (des optische Wellenleiters) verbunden ist; z.B. per Kleb- oder Rastverbindung.

Beispielsweise wird das erfindungsgemäße Bauelement in einem Wellenlängenbereich von 0,4 µm bis 1,7 µm, 0,82 µm - 0,87 µm, 0,97 µm - 1,070 µm, 1,26 µm - 1,36 µm und/oder 1,5 µm - 1,65 µm betrieben.

In einem weiteren Ausführungsbeispiel liegt der Brechungsindex des den Wellenleiterkern der aktiven Sektion ausbildenden Kernmaterials bezogen auf sichtbares Licht im Bereich von 1,9 bis 2,5 und der Brechungsindex des den Wellenleitermantel der aktiven Sektion ausbildenden Mantelmaterials im Bereich von 1,4 bis 1,55.

Bei dem Kernmaterial der aktiven Sektion handelt es sich zum Beispiel um ein Dielektrikum, das aus einem Nitrid, einem Oxid und/oder einem Silikat ausgebildet ist. Das Dielektrikum weist zum Beispiel Siliziumnitrid, Titandioxid, Hafniumdioxid, Hafniumsilikat, Zirkoniumsilikat, Zirkoniumdioxid und/oder Aluminiumdioxid auf oder ist aus diesen Materialien gebildet.

Darüber hinaus kann das Kernmaterial der aktiven Sektion eine Dicke von mindestens 50 nm, mindestens 100 nm oder mindestens 200 nm besitzen oder im Bereich von 50 bis 500 nm oder 100 bis 200 nm besitzen.

Gemäß einer anderen Ausgestaltung weist das Mantelmaterial der aktiven Sektion Siliziumdioxid und/oder ein Polymer und/oder das Mantelmaterial einer passiven Sektion des Wellenleiters Siliziumdioxid und/oder ein Polymer auf.

Das Kernmaterial einer passiven Sektion des Wellenleiters umfasst zum Beispiel ein Polymer (z.B. mit einem Brechungsindex zwischen 1,4 und 1,55) und/oder dotiertes Siliziumdioxid, und/oder das Mantelmaterial der passiven Sektion umfasst ein Polymer und/oder Siliziumdioxid. Das Polymer kann durch ein Acrylat, ein Ormocer, ein Spin-on-Glass-Polymer oder Silikon (jeweils z.B. mit einem Brechungsindex von 1,40 bis 1,55 oder 1,44 bis 1,49) ausgebildet sein.

Die Erfindung betrifft auch ein Verfahren zum Herstellen eines optoelektronischen Bauelementes, insbesondere wie oben beschrieben, mit den Schritten:
- Erzeugen eines optischen Wellenleiters, der mindestens eine aktive und mindestens eine passive Sektion umfasst, wobei
- das Erzeugen des optischen Wellenleiters ein Anordnen mindestens einer aus einem zweidimensionalen Material gebildeten Lage zumindest teilweise in einem Wellenleiterkern der aktiven Sektion oder zumindest teilweise angrenzend an den Wellenleiterkern umfasst, wobei
- der optische Wellenleiter so erzeugt wird, dass der Brechungsindexunterschied bezogen auf dieselbe Wellenlänge zwischen einem den Wellenleiterkern der aktiven Sektion ausbildenden Kernmaterial und einem einen Wellenleitermantel der aktiven Sektion ausbildenden Mantelmaterial größer ist als der Brechungsindexunterschied zwischen einem einen Wellenleiterkern der passiven Sektion ausbildenden Kernmaterial und einem einen Wellenleitermantel der passiven Sektion ausbildenden Mantelmaterial.

Die Erfindung wird im Folgenden anhand von Ausführungsbeispielen unter Bezugnahme auf die Figuren näher erläutert. Es zeigen:
- Figur 1: schematisch eine seitliche Schnittansicht eines optoelektronischen Bauelementes gemäß einem Ausführungsbeispiel der Erfindung;
- Figur 2: das Bauelement aus Figur 1 in einer teilweise transparenten Ansicht von oben;
- Figur 3: einen Schnitt durch das Bauelement aus Figur 1 im Bereich der aktiven Sektion;
- Figur 4: einen Schnitt durch das Bauelement aus Figur 1 im Bereich der passiven Sektion;
- Figur 5: schematisch eine Schnittansicht durch die aktive Sektion eines optoelektronischen Bauelementes gemäß einem weiteren Ausführungsbeispiel der Erfindung; und
- Figur 6: eine Schnittansicht durch die passive Sektion des Bauelementes aus Figur 5.

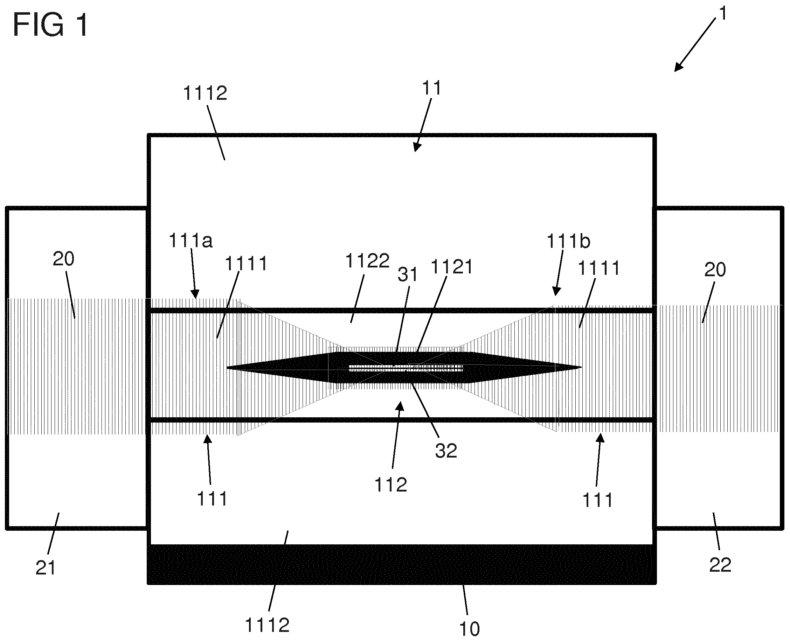

Das in Figur 1 dargestellte erfindungsgemäße optoelektronische Bauelement 1 umfasst einen auf einem Substrat 10 angeordneten integriert-optischen Wellenleiter 11, wobei ein erstes Ende des optischen Wellenleiters 11 mit einer ersten Glasfaser 21 und an ein zweites Ende des Wellenleiters 11 mit einer zweiten Glasfaser 22 gekoppelt ist. Beispielsweise wird über die erste Glasfaser 21 eine Lichtwelle 20 (vertikal schraffierter Bereich in Figur 1) in den optischen Wellenleiter 11 ein- und über die zweite Glasfaser 22 aus dem Wellenleiter 11 ausgekoppelt.

Der optische Wellenleiter 11 weist eine aktive Sektion 112 und eine passive Sektion 111 auf, wobei sich im Ausführungsbeispiel der Figur 1 ein Teilabschnitt 111 a der passiven Sektion 111 vor der aktiven Sektion 112, d.h. zwischen einer mit der ersten Glasfaser 21 gekoppelten Facette des Bauelementes 1 und der aktiven Sektion 112, und ein anderer Teilabschnitt 111b hinter der aktiven Sektion 112, d.h. zwischen der aktiven Sektion 112 und einer mit der zweiten Glasfaser 22 gekoppelten Facette des Bauelementes 1, befindet.

Die aktive Sektion 112 des Wellenleiters 11 zeichnet sich dadurch aus, dass in ihren Wellenleiterkern 1121 zwei Lagen 31, 32, die jeweils aus einem zweidimensionalen Material (z.B. Graphen) bestehen, eingebettet sind, und zwar derart, dass sich ein Kernmaterial, aus dem der Wellenleiterkern 1121 der aktiven Sektion 112 besteht, auch zwischen den Lagen 31, 32 erstreckt und die Lagen 31, 32 elektrisch voneinander isoliert. Das Kernmaterial erstreckt sich also jeweils angrenzend an zwei einander gegenüberliegende Seiten der Lagen 31, 32.

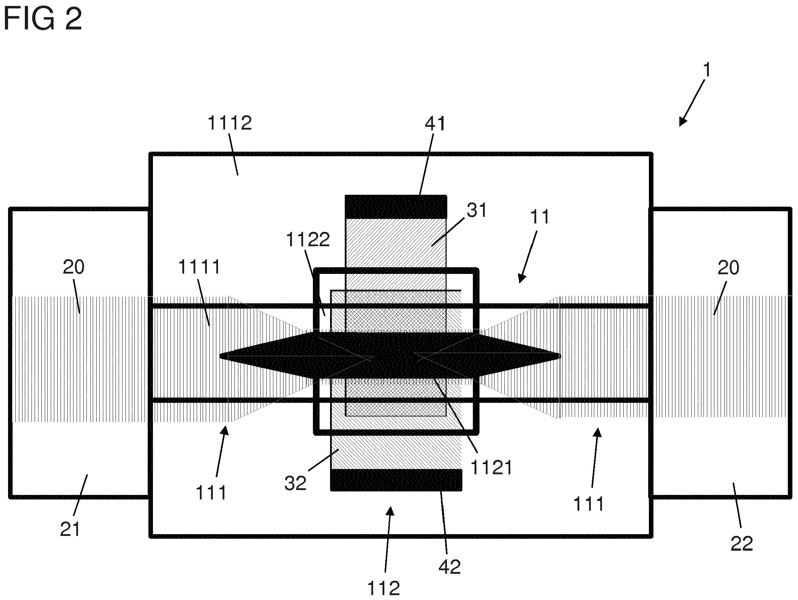

Als aktive Sektion 112 wird insbesondere der Bereich des Wellenleiters 11 angesehen, in dem sich die Lagen 31, 32 befinden. Nichtsdestotrotz erstreckt sich das Kernmaterial des Wellenleiterkerns 1121 in einen Wellenleiterkern 1111 sowohl des vorderen als auch des hinteren Teilabschnitts 111a, 111b der passiven Sektion 111 hinein, wobei im Beispiel sowohl die Dicke als auch die Höhe des Kernmaterials kontinuierlich nach außen hin (von den Lagen 31, 32 weg) abnimmt. Diese spezielle laterale Strukturierung des Kernmaterials der aktiven Sektion ist insbesondere in Fig. 2 gut zu erkennen, Der ebenfalls lateral strukturierte Wellenleiterkern 1111 der passiven Sektion 111 erstreckt sich wiederum angrenzend an den Wellenleiterkern 1121 in die aktive Sektion 112 des Wellenleiters 11 hinein und bildet dort einen Wellenleitermantel 1122 der aktiven Sektion 112 aus. Die Verjüngung des Kernmaterials des Wellenleiterkerns 1121 in die passive Sektion 111 hinein dient zur Reduzierung von Kopplungsverlusten zwischen der passiven und der aktiven Sektion 111, 112.

Der Wellenleiterkern 1111 der passiven Sektion 111 ist von einem Wellenleitermantel 1112 umgeben, wobei sich das Mantelmaterial des Mantels 1112 durchgehend von dem vorderen Teilabschnitt 1111a der passiven Sektion 111 über die aktive Sektion 112 bis zum Ende des hinteren Teilabschnitts 1111b der passiven Sektion 111 erstreckt.

Die aktive Sektion 112 weist andere Lichtführungseigenschaften auf als die passive Sektion 111 des Wellenleiters 11. Insbesondere unterscheiden sich die Materialien der Wellenleitermäntel 1112 und 1122 der passiven und der aktiven Sektion 111, 112 und auch die Kernmaterialien der Wellenleiterkerne 1111 und 1121. Darüber hinaus sind diese Materialien so gewählt, dass der Brechungsindexunterschied zwischen dem Kernmaterial des Wellenleiterkerns 1121 und dem Material des Mantels 1122 der aktiven Sektion 112 größer ist als der Brechungsindexunterschied zwischen dem Material des Kerns 1111 und dem Material des Mantels 1112 und der passiven Sektion 111.

insbesondere sind die Brechungsindexunterschiede der passiven und der aktiven Sektion 111, 112 so, dass die aktive Sektion 112 stark lichtführend und die passive Sektion schwach lichtführend ausgebildet sind. Dies hat zur Folge, dass die in dem optischen Wellenleiter 11 geführte Lichtwelle 20 in der passiven Sektion 111 eine größere Ausdehnung aufweist als in der aktiven Sektion 112, wie in Figur 1 dargestellt. Insbesondere ist die Ausdehnung der Lichtwelle 20 in den passiven Teilsektionen 111a, 111b jeweils vergleichbar mit der Ausdehnung der Lichtwelle in den Glasfasern 21, 22, so dass die Koppelverluste zwischen den Glasfasern 21, 22 und dem Wellenleiter 11 möglichst gering sind.

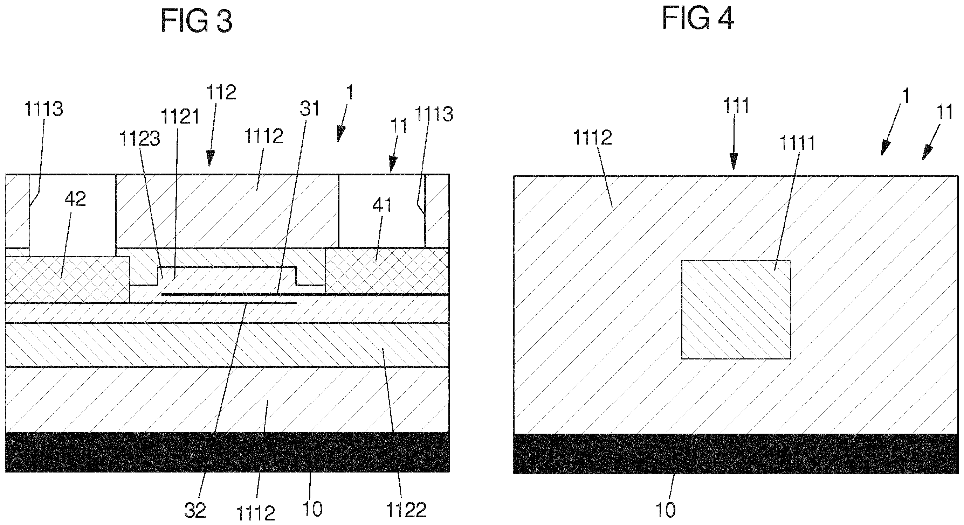

Aufgrund der starke Führung durch die aktive Sektion 112 des Wellenleiters 11 besitzt die Lichtwelle hier einen reduzierten Querschnitt, wodurch sie im zentralen Bereich der aktiven Sektion 112 und damit im Bereich der Lagen 31, 32 aus dem zweidimensionalen Material eine höhere Intensität aufweist. Entsprechend ergibt sich auch eine stärkere Wirkung der Lichtwelle auf die Lagen 31, 32 und damit eine bessere Effizienz der Wechselwirkung zwischen der Lichtwelle und den Lagen 31, 32. Eine laterale Führung der Lichtelle in der aktiven Sektion 112 wird dadurch erzeugt, dass der Wellenleiterkern 1121 eine Rippe 1123 ausbildet. An die Rippe 1123 grenzt seitlich das Material des Mantels 1122 an; vgl. Figur 3, die einen Schnitt senkrecht zum Wellenleiter 11 durch die aktive Sektion 112 zeigt. Der Wellenleiterkern 1111 des passiven Bereichs 111 weist hingegen einen zumindest näherungsweise rechteckigen oder quadratischen Querschnitt auf, wie in dem Schnitt durch die passive Sektion 111 in Fig. 4 dargestellt.

Bei dem Kernmaterial des Wellenleiterkerns 1121 der aktiven Sektion 112 handelt es sich beispielsweise um ein Dielektrikum (z.B. Siliziumnitrid), wobei sich das Kernmaterial insbesondere auch zwischen den beiden Lagen 31, 32 erstreckt. Denkbar ist allerdings auch, dass als elektrisch isolierendes Material zwischen den Lagen 31 und 32 ein anderes Dielektrikum verwendet wird als für den Rest des Wellenleiterkerns 1121. Als Material des Mantels 1112, das identisch zu dem Material des Kerns 1111 der passiven Sektion 111 ist, kommt z.B. ein Polymer in Frage. Der Mantel 1112 der passiven Sektion 111 wird z.B. ebenfalls aus einem Polymer gebildet. Insbesondere werden Materialien verwendet, mit denen sich ein Brechungsindex (bezogen auf sichtbares Licht oder eine sonstige Betriebswellenlänge des optoelektronischen Bauelementes) des Materials des Kerns 1121 der aktiven Sektion 112 im Bereich von 1,9 bis 2,5 und ein Brechungsindex des Mantelmaterials der aktiven Sektion 112 im Bereich von 1,4 bis 1,55 ergibt.

Wie in der Draufsicht des optoelektronischen Bauelementes 1 in Figur 2 und in Figur 3 gezeigt, sind die Lagen 31, 32 aus dem zweidimensionalen Material mit Metallkontakten 41, 42 versehen, über die eine elektrische Spannung an die Lagen 31, 32 ankoppelbar und auf diese Weise ein Lichtmodulator realisierbar ist. Die Kontakte 41, 42 sind jeweils auf einem Abschnitt der Lagen 31, 32 angeordnet, der aus dem Wellenleiterkern seitlich heraus ragt, wobei sich oberhalb der Kontakte 41, 42 Aussparungen 1113 in dem Wellenleitermantel 1112 der passiven Sektion befinden, über die die Kontakte 41, 42 zugänglich sind. Die Metallkontakte 41, 42 haben so ausreichend Abstand zur geführten Welle um Lichtverluste zu vermeiden.

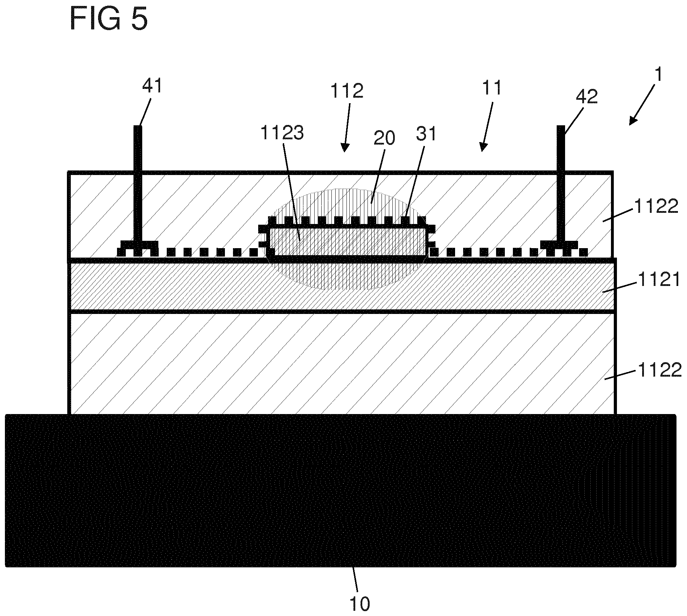

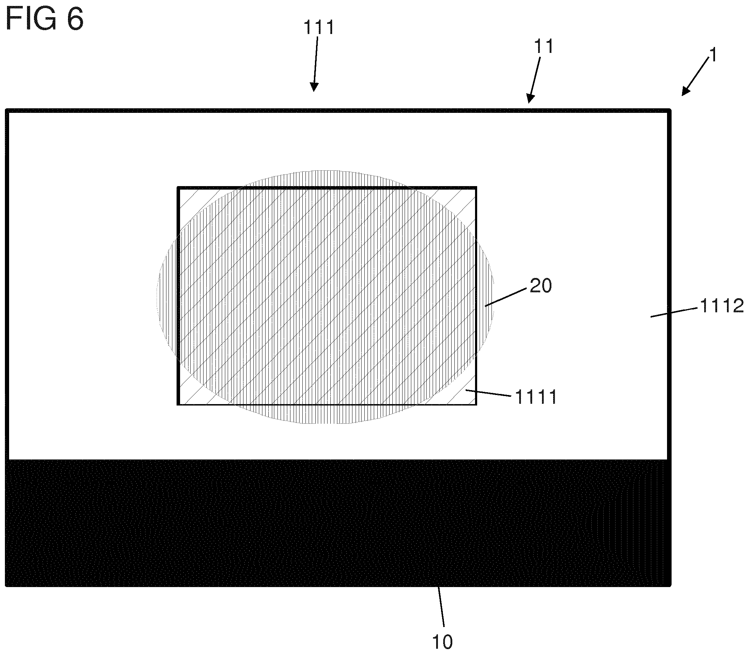

Eine weitere Ausführungsform des erfindungsgemäßen optoelektronischen Bauelementes 1 ist in den Figur 5 und 6 illustriert. Auch dieses Bauelement weist eine passive und eine aktive Sektion 111, 112 auf, wobei Figur 5 einen Schnitt durch die aktive Sektion 112 und Figur 6 einen Schnitt durch die passive Sektion 111 zeigt. Anders als in den vorhergehenden Ausführungsbeispielen ist nur eine Lage 31 aus einem zweidimensionalen Material vorhanden, die sich zudem nicht in dem Wellenleiterkern 1121 der aktiven Sektion 112 befindet, sondern angrenzend zu dem Wellenleiterkern 1121 angeordnet ist. Genauer erstreckt sich die Lage 31 über eine Rippe 1123 des Wellenleiterkerns 1121 hinweg und verläuft jeweils seitlich der Rippe 1123 bis zu Kontakten 41, 42, über die z.B. ein in der Lage 31 erzeugte Fotostrom messbar und somit das Bauelement 1 als Fotodetektor betreibbar ist. Die Kontakte 41, 42 sind so positioniert, dass sie außerhalb der in der aktiven Sektion 112 geführten optischen Welle 20 liegen.

## Patentansprüche

1. Optoelektronisches Bauelement, mit
- einem optischen Wellenleiter (11), der mindestens eine passive und mindestens eine aktive Sektion (111, 112) umfasst, wobei
- die aktive Sektion (112) mindestens eine aus einem zweidimensionalen Material gebildete Lage (31, 32) aufweist, wobei die Lage (31, 32) aus dem zweidimensionalen Material zumindest teilweise in einem Wellenleiterkern (1121) der aktiven Sektion (112) oder zumindest teilweise angrenzend an den Wellenleiterkern (1121) der aktiven Sektion (112) angeordnet ist,
**dadurch gekennzeichnet, dass**
der Brechungsindexunterschied bezogen auf dieselbe Wellenlänge zwischen einem den Wellenleiterkern (1121) der aktiven Sektion (112) ausbildenden Kernmaterial und einem einen Wellenleitermantel (1122) der aktiven Sektion (112) ausbildenden Mantelmaterial größer ist als der Brechungsindexunterschied zwischen einem einen Wellenleiterkern (1111) der passiven Sektion (111) ausbildenden Kernmaterial und einem einen Wellenleitermantel (1112) der passiven Sektion (111) ausbildenden Mantelmaterial (1112).

2. Optoelektronisches Bauelement nach Anspruch 1, **dadurch gekennzeichnet, dass** das Kernmaterial der aktiven Sektion (112) zur lateralen Führung einer in den Wellenleiter (11) eingekoppelten Lichtwelle (20) strukturiert ist.

3. Optoelektronisches Bauelement nach Anspruch 1 oder 2, **dadurch gekennzeichnet, dass** zumindest die aktive Sektion einen einmodigen Wellenleiter ausbildet.

4. Optoelektronisches Bauelement nach einem der vorhergehenden Ansprüche, **dadurch gekennzeichnet, dass** die Lage aus zweidimensionalem Material zumindest in einer Richtung aus dem Wellenleiterkern seitlich heraus ragt und die herausragende Lage mit Abstand zur geführten optischen Welle elektrisch kontaktiert ist.

5. Optoelektronisches Bauelement nach einem der vorhergehenden Ansprüche, **dadurch gekennzeichnet, dass** sich das Kernmaterial der aktiven Sektion (112) von dem Kernmaterial der passiven Sektion (111) unterscheidet, und/oder sich das Mantelmaterial der aktiven Sektion (112) von dem Mantelmaterial der passiven Sektion (111) unterscheidet.

6. Optoelektronisches Bauelement nach einem der vorhergehenden Ansprüche, **dadurch gekennzeichnet, dass** die aktive Sektion (112) des optischen Wellenleiters (11) stark führend und die passive Sektion (111) des optischen Wellenleiters (11) schwach führend ausgebildet ist.

7. Optoelektronisches Bauelement nach einem der vorhergehenden Ansprüche, **dadurch gekennzeichnet, dass** der Brechungsindexunterschied zwischen dem Kern- und Mantelmaterial der aktiven Sektion (112) mindestens 0,2, mindestens 0,3 oder mindestens 0,4 beträgt, und/oder der Brechungsindexunterschied zwischen dem Kern- und Mantelmaterial der passiven Sektion (111) höchstens 0,1 oder höchstens 0,05 beträgt.

8. Optoelektronisches Bauelement nach einem der vorhergehenden Ansprüche, **dadurch gekennzeichnet, dass** die aktive Sektion (112) des Wellenleiters (11) so ausgebildet ist, dass die dort geführte Lichtwelle einen Durchmesser von weniger als 3 µm oder weniger als 2 µm besitzt, und/oder die passive Sektion (111) des Wellenleiters (11) so ausgebildet ist, dass die dort geführte Lichtwelle (20) einen Durchmesser von mindestens 3 µm oder mindestens 5 µm aufweist.

9. Optoelektronisches Bauelement nach einem der vorhergehenden Ansprüche, **dadurch gekennzeichnet, dass** sich das Kernmaterial der aktiven Sektion (112) in die passive Sektion hinein erstreckt, wobei die Ausdehnung des Kernmaterials senkrecht zur Längsrichtung des optischen Wellenleiters (11) mit der Entfernung von der aktiven Sektion (112) abnimmt.

10. Optoelektronisches Bauelement nach Anspruch 9, **dadurch gekennzeichnet, dass** Ausdehnung des Kernmaterials kontinuierlich mit der Entfernung von der aktiven Sektion über eine Strecke von mindestens 30 µm oder mindestens 50 µm abnimmt.

11. Optoelektronisches Bauelement nach einem der vorhergehenden Ansprüche, **dadurch gekennzeichnet, dass** das Mantelmaterial der aktiven Sektion (112) zumindest einen Teil des Kernmaterials der passiven Sektion (111) ausformt.

12. Optoelektronisches Bauelement nach einem der vorhergehenden Ansprüche, **dadurch gekennzeichnet, dass** der Brechungsindex des den Wellenleiterkern (1121) der aktiven Sektion (112) ausbildenden Kernmaterials bezogen auf sichtbares Licht im Bereich von 1,9 bis 2,5 und der Brechungsindex des den Wellenleitermantel (1122) der aktiven Sektion (112) ausbildenden Mantelmaterials im Bereich von 1,4 bis 1,55 liegt.

13. Optoelektronisches Bauelement nach einem der vorhergehenden Ansprüche, **dadurch gekennzeichnet, dass** es sich bei dem Kernmaterial der aktiven Sektion (112) um ein Dielektrikum handelt, das aus einem Nitrid, einem Oxid und/oder einem Silikat ausgebildet ist.

14. Optoelektronisches Bauelement nach einem der vorhergehenden Ansprüche, **dadurch gekennzeichnet, dass** die Lage (31, 32) aus dem zweidimensionalen Material zumindest teilweise an eine Ober- oder Unterseite des Wellenleiterkerns (1121) der aktiven Sektion angrenzt.

15. Verfahren zum Herstellen eines optoelektronischen Bauelementes, insbesondere nach einem der vorhergehenden Ansprüche, mit den Schritten:
- Erzeugen eines optischen Wellenleiters (11), der mindestens eine passive und mindestens eine aktive Sektion (111, 112) umfasst, wobei
- das Erzeugen des optischen Wellenleiters (11) ein Anordnen mindestens einer aus einem zweidimensionalen Material gebildeten Lage (31, 32) zumindest teilweise in einem Wellenleiterkern (1121) der aktiven Sektion (112) oder zumindest teilweise angrenzend an den Wellenleiterkern (1121) der aktiven Sektion (112) umfasst,
**dadurch gekennzeichnet, dass**
der optische Wellenleiter (11) so erzeugt wird, dass der Brechungsindexunterschied bezogen auf dieselbe Wellenlänge zwischen einem den Wellenleiterkern (1121) der aktiven Sektion (112) ausbildenden Kernmaterial und einem einen Wellenleitermantel (1122) der aktiven Sektion (112) ausbildenden Mantelmaterial größer ist als der Brechungsindexunterschied zwischen einem einen Wellenleiterkern (1111) der passiven Sektion (111) ausbildenden Kernmaterial und einem einen Wellenleitermantel (1112) der passiven Sektion (111) ausbildenden Mantelmaterial (1112).

## Claims

1. An optoelectronic component, comprising
- an optical waveguide (11) comprising at least one passive and at least one active section (111, 112), wherein
- the active section (112) has at least one layer (31, 32) formed from a two-dimensional material, wherein the layer (31, 32) composed of the two-dimensional material is arranged at least partly in a waveguide core (1121) of the active section (112) or in a manner at least partly adjoining the waveguide core (1121) of the active section (112),
**characterized in that**
the difference in refractive index relative to the same wavelength between a core material forming the waveguide core (1121) of the active section (112) and a cladding material forming a waveguide cladding (1122) of the active section (112) is greater than the difference in refractive index between a core material forming a waveguide core (1111) of the passive section (111) and a cladding material (1112) forming a waveguide cladding (1112) of the passive section (111).

2. The optoelectronic component as claimed in claim 1, **characterized in that** the core material of the active section (112) is structured for laterally guiding a light wave (20) coupled into the waveguide (11).

3. The optoelectronic component as claimed in claim 1 or 2, **characterized in that** at least the active section forms a monomode waveguide.

4. The optoelectronic component as claimed in any of the preceding claims, **characterized in that** the layer composed of two-dimensional material projects laterally from the waveguide core at least in one direction and the projecting layer is electrically contacted at a distance from the guided optical wave.

5. The optoelectronic component as claimed in any of the preceding claims, **characterized in that** the core material of the active section (112) differs from the core material of the passive section (111), and/or the cladding material of the active section (112) differs from the cladding material of the passive section (111).

6. The optoelectronic component as claimed in any of the preceding claims, **characterized in that** the active section (112) of the optical waveguide (11) is embodied in a strongly guiding fashion and the passive section (111) of the optical waveguide (11) is embodied in a weakly guiding fashion.

7. The optoelectronic component as claimed in any of the preceding claims, **characterized in that** the difference in refractive index between the core material and cladding material of the active section (112) is at least 0.2, at least 0.3 or at least 0.4, and/or the difference in refractive index between the core material and cladding material of the passive section (111) is at most 0.1 or at most 0.05.

8. The optoelectronic component as claimed in any of the preceding claims, **characterized in that** the active section (112) of the waveguide (11) is embodied such that the light wave guided there has a diameter of less than 3 µm or less than 2 µm, and/or the passive section (111) of the waveguide (11) is embodied such that the light wave (20) guided there has a diameter of at least 3 µm or at least 5 µm.

9. The optoelectronic component as claimed in any of the preceding claims, **characterized in that** the core material of the active section (112) extends into the passive section, wherein the extent of the core material perpendicular to the longitudinal direction of the optical waveguide (11) decreases with distance from the active section (112).

10. The optoelectronic component as claimed in claim 9, **characterized in that** the extent of the core material decreases continuously with distance from the active section over a span of at least 30 µm or at least 50 µm.

11. The optoelectronic component as claimed in any of the preceding claims, **characterized in that** the cladding material of the active section (112) shapes at least one part of the core material of the passive section (111).

12. The optoelectronic component as claimed in any of the preceding claims, **characterized in that** the refractive index of the core material forming the waveguide core (1121) of the active section (112) relative to visible light lies in the range of 1.9 to 2.5 and the refractive index of the cladding material forming the waveguide cladding (1122) of the active section (112) lies in the range of 1.4 to 1.55.

13. The optoelectronic component as claimed in any of the preceding claims, **characterized in that** the core material of the active section (112) is a dielectric formed from a nitride, an oxide and/or a silicate.

14. The optoelectronic component as claimed in any of the preceding claims, **characterized in that** the layer (31, 32) composed of the two-dimensional material at least partly adjoins a top side or underside of the waveguide core (1121) of the active section.

15. A method for producing an optoelectronic component, in particular as claimed in any of the preceding claims, comprising the following steps:
- producing an optical waveguide (11) comprising at least one passive and at least one active section (111, 112), wherein
- producing the optical waveguide (11) comprises arranging at least one layer (31, 32) formed from a two-dimensional material at least partly in a waveguide core (1121) of the active section (112) or in a manner at least partly adjoining the waveguide core (1121) of the active section (112),
**characterized in that**
the optical waveguide (11) is produced such that the difference in refractive index relative to the same wavelength between a core material forming the waveguide core (1121) of the active section (112) and a cladding material forming a waveguide cladding (1122) of the active section (112) is greater than the difference in refractive index between a core material forming a waveguide core (1111) of the passive section (111) and a cladding material (1112) forming a waveguide cladding (1112) of the passive section (111).

## Revendications

1. Composant optoélectronique avec
- un guide d'onde (11) optique qui comprend au moins une section passive et au moins une section active (111, 112), dans lequel
- la section active (112) présente au moins une couche (31, 32) formée à partir d'un matériau bidimensionnel, dans lequel la couche (31, 32) en matériau bidimensionnel est agencée au moins partiellement dans un noyau de guide d'onde (1121) de la section active (112) ou au moins partiellement de manière contiguë au noyau de guide d'onde (1121) de la section active (112),
**caractérisé en ce que**
la différence d'indice de réfraction liée à cette même longueur d'onde entre un matériau de noyau réalisant le noyau de guide d'onde (1121) de la section active (112) et un matériau d'enveloppe réalisant une enveloppe de guide d'onde (1122) de la section active (112) est supérieure à la différence d'indice de réfraction entre un matériau de noyau réalisant un noyau de guide d'onde (1111) de la section passive (111) et un matériau d'enveloppe (1112) réalisant une enveloppe de guide d'onde (1112) de la section passive (111).

2. Composant optoélectronique selon la revendication 1, **caractérisé en ce que** le matériau de noyau de la section active (112) est structuré pour le guidage latéral d'une onde de lumière (20) couplée dans le guide d'onde (11).

3. Composant optoélectronique selon la revendication 1 ou 2, **caractérisé en ce qu'**au moins la section active réalise un guide d'onde monomode.

4. Composant optoélectronique selon l'une quelconque des revendications précédentes, **caractérisé en ce que** la couche en matériau bidimensionnel dépasse latéralement au moins dans une direction du noyau de guide d'onde et la couche qui dépasse est en contact électrique à distance par rapport avec l'onde optique guidée.

5. Composant optoélectronique selon l'une quelconque des revendications précédentes, **caractérisé en ce que** le matériau de noyau de la section active (112) se distingue du matériau de noyau de la section passive (111), et/ou le matériau d'enveloppe de la section active (112) se distingue du matériau d'enveloppe de la section passive (111).

6. Composant optoélectronique selon l'une quelconque des revendications précédentes, **caractérisé en ce que** la section active (112) du guide d'onde (11) optique est réalisée à guidage fort et la section passive (111) du guide d'onde (11) optique est réalisé à guidage faible.

7. Composant optoélectronique selon l'une quelconque des revendications précédentes, **caractérisé en ce que** la différence d'indice de réfraction entre le matériau de noyau et le matériau d'enveloppe de la section active (112) s'élève au moins à 0,2, au moins à 0,3 ou au moins à 0,4, et/ou la différence d'indice de réfraction entre le matériau de noyau et le matériau d'enveloppe de la section passive (111) s'élève au plus à 0,1 ou au plus à 0,05.

8. Composant optoélectronique selon l'une quelconque des revendications précédentes, **caractérisé en ce que** la section active (112) du guide d'onde (11) est réalisée de sorte que l'onde de lumière qui y est guidée possède un diamètre de moins de 3 µm ou moins de 2 µm, et/ou la section passive (111) du guide d'onde (11) est réalisée de sorte que l'onde de lumière (20) qui y est guidée présente un diamètre d'au moins 3 µm ou d'au moins 5 µm.

9. Composant optoélectronique selon l'une quelconque des revendications précédentes, **caractérisé en ce que** le matériau de noyau de la section active (112) s'étend jusque dans la section passive, dans lequel l'extension du matériau de noyau diminue perpendiculairement au sens longitudinal du guide d'onde (11) optique au fur et à mesure de l'éloignement de la section active (112).

10. Composant optoélectronique selon la revendication 9, **caractérisé en ce que** l'extension du matériau de noyau diminue en continu au fur et à mesure de l'éloignement de la section active sur un trajet d'au moins 30 µm ou d'au moins 50 µm.

11. Composant optoélectronique selon l'une quelconque des revendications précédentes, **caractérisé en ce que** le matériau d'enveloppe de la section active (112) forme au moins une partie du matériau de noyau de la section passive (111).

12. Composant optoélectronique selon l'une quelconque des revendications précédentes, **caractérisé en ce que** l'indice de réfraction du matériau de noyau réalisant le noyau de guide d'onde (1121) de la section active (112) lié à la lumière visible se trouve dans la plage de 1,9 à 2,5 et l'indice de réfraction du matériau d'enveloppe réalisant l'enveloppe de guide d'onde (1122) de la section active (112) se trouve dans la plage de 1,4 à 1,55.

13. Composant optoélectronique selon l'une quelconque des revendications précédentes, **caractérisé en ce qu'**il s'agit pour le matériau de noyau de la section active (112) d'un diélectrique qui est réalisé à partir d'un nitrure, d'un oxyde et/ou d'un silicate.

14. Composant optoélectronique selon l'une quelconque des revendications précédentes, **caractérisé en ce que** la couche (31, 32) en matériau bidimensionnel est contiguë au moins partiellement à un côté supérieur ou inférieur du noyau de guide d'onde (1121) de la section active.

15. Procédé de fabrication d'un composant optoélectronique, en particulier selon l'une quelconque des revendications précédentes, avec les étapes suivantes :
- la génération d'un guide d'onde (11) optique qui comprend au moins une section passive et au moins une section active (111, 112), dans lequel
- la génération du guide d'onde (11) optique comprend un agencement d'au moins une couche (31, 32) formée en un matériau bidimensionnel au moins partiellement dans un noyau de guide d'onde (1121) de la section active (112) ou au moins partiellement contiguë au noyau de guide d'onde (1121) de la section active (112),
**caractérisé en ce que**
le guide d'onde (11) optique est généré de sorte que la différence d'indice de réfraction liée à la même longueur d'onde entre un matériau de noyau réalisant le noyau de guide d'onde (1121) de la section active (112) et un matériau d'enveloppe réalisant une enveloppe de guide d'onde (1122) de la section active (112) soit supérieure à la différence d'indice de réfraction entre un matériau de noyau réalisant un noyau de guide d'onde (1111) de la section passive (111) et un matériau d'enveloppe (1112) réalisant une enveloppe de guide d'onde (1112) de la section passive (111).
